Europäisches Patentamt

European Patent Office

Office européen des brevets

(11) Publication number: **0 065 493**
A1

# EUROPEAN PATENT APPLICATION

(21) Application number: **82830087.1**

(22) Date of filing: **07.04.82**

(51) Int. Cl.³: **B 07 B 4/02,** B 07 B 9/00

(30) Priority: **19.05.81 IT 8338581**

(43) Date of publication of application: **24.11.82**
**Bulletin 82/47**

(84) Designated Contracting States: **AT BE CH DE FR GB LI LU NL SE**

(71) Applicant: **DANECO-DANIELI ECOLOGIA Spa, Via Nazionale, 85 S.S. 56, I-33048 San Giovanni al Natisone (UD) (IT)**

(72) Inventor: **Babos, Luciano, Via Doberdò, 26, I-34100 Trieste (IT)**
Inventor: **Martegani, Antonio Dario, Via Ovidio, 4/3, I-34100 Trieste (IT)**

(74) Representative: **Petraz, Gilberto, G.L.P. S.a.s. di Gilberto Petraz P.le Cavedalis 6/2, I-33100 Udine (IT)**

(54) **Device to sort compost.**

(57) The invention concerns a device to sort compost, whereby said device can remove glass and hard bodies such as stony material, for instance, and also any residues of light plastic materials from the compost and includes in cooperation with a main chamber (10) stretching substantially in an upright direction and fed by a vibrating hopper (12):
– a wall (13) through which a stream of air (20) passes and spreads into said main chamber (10), and
– at least two hoppers (16–17) located substantially underneath the discharge zone (21) of said vibrating hopper (12) and possibly cooperating with a rotating sorting drum (18),
– whereby a possible separator (19) working with a flow of air and able to gather the light substances may be positioned at the side,
– and whereby the discharged air may perhaps be re-cycled (22) advantageously through the aspirating fan group (15).

Description of the invention entitled:

"DEVICE TO SORT COMPOST"

in the name of DANECO - Danieli Ecologia S.p.A.

--------------

This invention concerns a device to sort compost. To be more exact, the invention concerns a device to sort compost whereby said device can remove glass and hard bodies such as stony material, for instance, and any residues of light plastic materials from the compost itself.

It is known that in plants which treat wastes and which form the compost from the organic fraction, the compost is obtained as the main product except for any materials which may be sorted for re-circulation in a productive activity.

It is known that the presence of glass, even in small particles, in compost lessens the commercial value of the compost itself very greatly.

It follows that it becomes necessary to remove the glass and any other hard bodies from the compost for the purpose of getting a product with a higher commercial value.

This invention entails outstanding advantages in that the device can be readily introduced downstream from systems for the overhead transport and storage of the compost and carries out removal of glass and light plastics and at the same time produces a cleaned compost with a simple and reliable method and a very low consumption of energy.

Thus, the invention enables the glass, hard bodies and light plastics to be removed from the compost so as to refine the latter.

This removal is obtained by making use of the combined action of aerodynamic and gravitational forces.

According to the invention a rotating drum is envisaged which can improve the sorted collection of the materials thus removed.

According to the invention a main chamber is fed through a vibrating hopper and is positioned substantially upright.

The compost together with any suitable materials falls from the vibrating hopper and is struck by a stream of air which conditions its trajectory.

The lightest portion, which usually consists of light plastics, is thrust far away, whereas the normal portion consisting of the compost follows a slightly modified trajectory.

The hardest and heaviest portion, instead, keeps to a substantially straight trajectory and the sorting of said portion of the compost may be further enhanced by a possible rotating drum.

Suitable hoppers located at the bottom and a possible separator working with a flow of air serve to gather the glass and hard bodies, the cleaned compost and the light plastics respectively.

The air discharged can be dispersed into the surrounding environment or be recovered with an appropriate duct and recycled through the fan itself.

The invention is embodied, therefore, with a device to sort compost, whereby the device is able to remove glass and hard bodies such as stony materials, for instance, and any residues of light plastic materials from the compost and is characterized by including in cooperation with a main cham-

ber stretching substantially in an upright direction and fed by a vibrating hopper:

- a wall through which a stream of air passes and spreads into said main chamber,

- and two hoppers located substantially underneath the zone of discharge of the vibrating hopper and possibly cooperating with a rotating sorting drum,

- whereby a separator which works with a flow of air and can gather the light substances may possibly be located at the side,

- and whereby the air discharged may perhaps be re-cycled advantageously through the fan group.

With the help of the attached table let us now see the device of the invention shown with a diagram in said table.

The device of the invention consists of a main chamber IO fed from above by a conveyor belt II which discharges the compost to be sorted above a vibrating hopper I2.

Said vibrating hopper I2 in its turn discharges the material into the main chamber and lets it fall from above.

While said material 2I is falling, it is struck by a stream of air 20.

Said stream of air 20 is generated by fan means I5 and is conveyed by conveyor-baffle means I4 cooperating with wall means I3 of a substantially porous kind.

The stream of air 20 strikes the material 2I falling from the vibrating hopper I2 and modifies the trajectory of said fall.

The lightest material is displaced by the stream of air so much that it follows a trajectory I2I which takes it so as to drop into the separator I9 working with a flow of air. Said light material consists substantially of light plastics.

The cleaned compost tends to keep to an intermediate trajectory 22I and to drop into the hopper I7, whence it is with-

drawn along B.

The hard material such as glass, hard bodies and stony material tends to follow a substantially straight trajectory and to knock against the possible rotating drum 18, which throws it against the wall of the hopper 16.

The rotating drum 18 can be equipped with scraper brushes so as to enhance its performance.

The air flows out from the outlet ducts 22-122 and can be discharged, or else can be re-cycled through 222 so as to be re-aspirated wholly or partly by the fan means 15.

Thus the glass and other hard bodies having a volumetric mass much greater than that of the compost are withdrawn from the hopper 16 along A.

The cleaned compost, which has followed an intermediate trajectory, is withdrawn from the hopper 17 along B.

The light plastics are recovered along C from the separator 19 working with a flow of air.

As we said earlier, the differentiated gathering of the two kinds of materials coming to the hoppers 16-17 is further improved by increasing the sorting efficiency with the provision of a rotating drum 18 which perhaps may be equipped with scraper brushes.

We have described here a preferential embodiment of the invention, but variants are possible.

Thus the shapes, sizes and characteristics of the main chamber can be modified and it can be envisaged that the porous wall is replaced with other walls that can be employed for the purpose.

The vibrating hopper can be replaced with other distributing systems and the fan means can be replaced with other means that throw out air; also the hoppers can be equipped with automatic dischargers, and so on.

These and other variants are all possible for a technician in this field without departing thereby from the scope of the idea of the solution.

## C L A I M S

I. Device to sort compost, whereby said device can remove glass and hard bodies such as stony material, for instance, and any residues of light plastic material from the compost and is characterised by including in cooperation with a main chamber (IO) stretching substantially in an upright direction and fed by a vibrating hopper (I2):

- a wall (I3) through which a stream of air (20) passes and spreads into said main chamber (IO), and

- at least two hoppers (I6-I7) located substantially underneath the discharge zone (2I) of said vibrating hopper (I2) and possibly cooperating with a rotating sorting drum (I8),

- whereby a possible separator (I9) working with a flow of air is located at the side and can gather the light substances,

- and whereby the discharged air may perhaps be re-cycled (22) advantageously through the aspirating fan group (I5).

2. Device to sort compost as in Claim I, characterised by the fact that the wall (I3) through which the stream of air (20) passes is a wall of a substantially porous kind.

3. Device to sort compost as in Claim I or 2, characterised by the fact that in the direction of entry of air (20) into the main chamber (IO) there are located in succession:

- the hopper (I6) which gathers glass and hard bodies in a position substantially underneath the discharge (2I) of the vibrating hopper (I2),

- a hopper (I7) for cleaned compost in an intermediate position beyond said gathering hopper (I6), and

- a separator (I9) working with a flow of air for light plastics in a rearward position.

4. Device to sort compost as in Claim I and in one or the other of the Claims thereafter, characterised by the fact that a rotating sorting drum(I8) is comprised in a position

0065493

partly above the gathering hopper (16).

5. Device to sort compost as in Claim 1 and in one or another of the Claims thereafter, characterised by the fact that the outlet ducts (22-122) are connected at least partly to the aspirating inlet of the fan means (15).

0065493

1/1

**European Patent Office**

## EUROPEAN SEARCH REPORT

Application number

EP 82 83 0087

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR-A-2 302 148 (GOERGEN) *Page 9, line 33 - page 11, line 2; page 11, line 37 - page 13, line 5; figures 1,4-6* & US - A - 4 242 197 --- | 1-5 | B 07 B 4/02 B 07 B 9/00 |
| X | FR-A-2 160 528 (KLOCKNERHUMBOLDT - DEUTZ AG) *Page 1, line 1 - page 2, line 5; page 8, line 14 - page 9, line 26; figure 2* --- | 1-3,5 | |
| X | DE-A-2 535 881 (KRAUSS-MAFFEI AG.) *Page 3, line 19 - page 7, line 13; figure* --- | 1-3,5 | |
| X | DE-C- 92 228 (PAPE et al.) *Page 2, left-hand column, line 28 - right-hand column, line 20; figure 3* --- | 1,2 | **TECHNICAL FIELDS SEARCHED (Int. Cl. 3)** B 07 B |
| X | DE-B-1 293 003 (OTTENSENER EISENWERK) *Column 2, lines 12-68; figure 1* ----- | 1 | |

The present search report has been drawn up for all claims

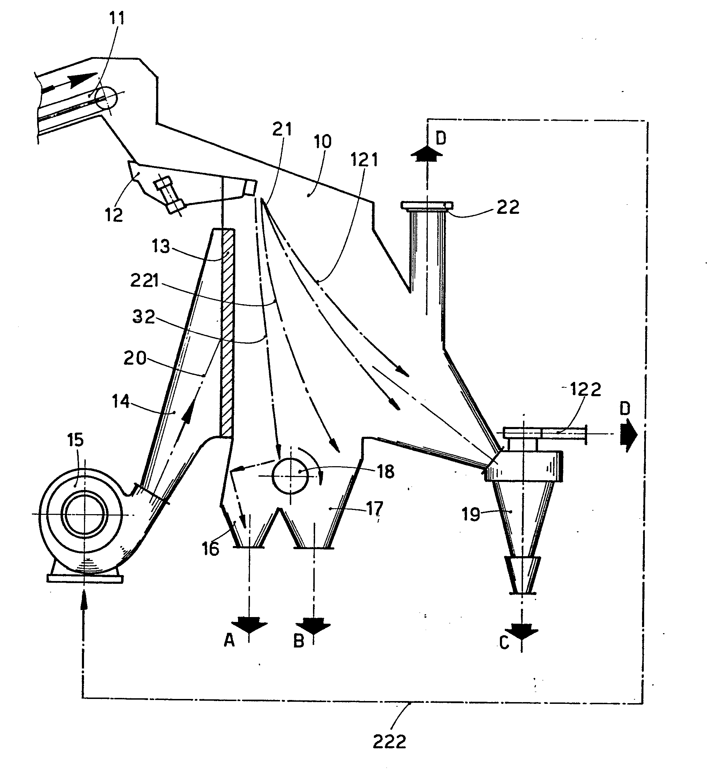

| Place of search THE HAGUE | Date of completion of the search 23-06-1982 | Examiner LAVAL J.C.A |
|---|---|---|